# EUROPEAN PATENT SPECIFICATION

(11) **EP 3 548 192 B1**
(45) Date of publication and mention of the grant of the patent: **01.11.2023**
(21) Application number: 17876354.6
(22) Date of filing: 29.11.2017
(51) Int. Cl.: B03B 9/04, B03B 9/06, C22B 7/00

(54) **METHODS AND SYSTEMS FOR POLISHING AND RECOVERING ALUMINUM FROM A WASTE MATERIAL**
VERFAHREN UND SYSTEME ZUM POLIEREN UND ZUR RÜCKGEWINNUNG VON ALUMINIUM AUS ABFALLMATERIAL
PROCÉDÉS ET SYSTÈMES DE POLISSAGE ET DE RÉCUPÉRATION D'ALUMINIUM À PARTIR D'UN DÉCHET

(30) Priority: 29.11.2016 US 201662427793 P; 15.05.2017 US 201762506329 P
(43) Date of publication of application: 09.10.2019
(73) Proprietor: Valerio, Thomas, A., Atlanta, GA 30354 (US)
(72) Inventor: Valerio, Thomas, A., Atlanta, GA 30354 (US)
(74) Representative: Dr. Träger & Strautmann PAe PartG mbB
(86) International application number: PCT/US2017/063812
(87) International publication number: WO 2018/102472

(56) References cited:
- US-A- 4 721 606
- US-A1- 2012 032 008
- US-A1- 2013 181 075
- US-A1- 2015 136 663

## Description

### RELATED APPLICATIONS

This application claims the benefit of U.S. Provisional Patent Application Nos. 62/427,793, filed November 29, 2016, and 62/506,329 filed on May 15, 2017.

### TECHNICAL FIELD

This application relates to systems and methods for separating, purifying, or polishing aluminum from ash zorba or zorba. More particularly, this application relates to systems and methods for polishing aluminum (e.g., silicon, glass, cast aluminum, copper, brass, zinc, lead, and any other impurities) from IBA zorba or zorba using a wet process. This application also relates to systems and methods for purifying or upgrading aluminum recovered from IBA or zorba by reducing impurities and sealing the metals from further oxidation.

### BACKGROUND

Recycling of waste materials is highly desirable from many viewpoints, not the least of which are financial and ecological. Properly sorted recyclable materials can often be sold for significant revenue. Many of the more valuable recyclable materials do not biodegrade within a short period, and so their recycling significantly reduces the strain on local landfills.

However, in many instances there has been no cost-effective method for achieving the necessary sorting or for recovering a highly pure aluminum product. While aluminum recycling has been available for some time, this technique is plainly ineffective for recovering a high purity aluminum product from zorba, whether from ash, automobile waste residue or other waste material. Document US 2015/0136663 A1 is directed to a process for treating automobile shredder residue to separate and collect in particular aluminum and magnesium. In US 2013/0181075 A1 a method and a system for recovering metals from combustion ash containing ferrous and nonferrous metals are discussed. Document US 2012/0032008 A1 discloses a system and methods for increasing recyclable material recovery from automobile shredder residue. Document US 4,721,606 A is directed to a method for treating catalysts comprising transition metal compounds, in particular with aluminum oxide-containing supports.

As a result, there is a need for a cost-effective, efficient method and system for recovering purified aluminum from zorba.

### BRIEF DESCRIPTION OF THE DRAWINGS

This disclosure is illustrated in the figures of the accompanying drawings which are meant to be illustrative and not limiting, in which like references are intended to refer to like or corresponding parts, and in which:
FIG. 1 illustrates an exemplary flow diagram for recovering metals from a waste stream according to the present disclosure;
FIG. 2 illustrates an exemplary system for recovering metals from a waste stream according to the present disclosure.

### SUMMARY

One aspect of this application includes a method for separating waste material that includes the steps of providing waste material having aluminium and heavy metals; rough processing the waste material to remove the heavy metals; floating the material to remove additional impurities; sizing the material to predetermined sizes; comminuting the material, wet screening the material, washing the material with an acid produce darkened material; and sorting the material to separate the darkened material and a purified aluminum material. The purified aluminum material may be further purified using and eddy current.

Another aspect of this application includes a system for preparing an aluminum product having a source of waste material having aluminum and heavy metals; a rough processing device capable of removing the heavy metals from the waste material; a sizing device that sizes the waste material to predetermined sizes; a comminution device that is a ball mill; a first screen that is a two-stage screen; an acid wash; at least one optical sorter; and a collector for the aluminum product.

### DETAILED DESCRIPTION

Embodiments of methods and systems for the separation and recovery of metal, particularly aluminum, from a waste material using comminution and acid washes are disclosed. The disclosed embodiments are particularly well-suited for producing a high-grade aluminum product. Some embodiments of the disclosed method include one or more of the following five steps: (1) rough processing, (2) comminuting the material, (4) washing the material with acid, and (5) collecting/sorting the material to recover an aluminum product or a very pure aluminum product.

This application includes methods and systems for improving the quality and aesthetics of non-ferrous metals, particularly aluminum, through the use of comminution (e.g., a ball mill). Specific embodiments may be carried out in wet processes. That is, the wet process can include a slurry of incinerator bottom ash (IBA), ash, or automobile shredder residue zorba or zorba that has aluminum content. In illustrative example, the product can be a substitute for prime grade aluminum suitable for high grade application, e.g., coil, strip, sheet, plates, tube, bar and structural products (e.g., prime alloys Series 2000, 3000, 5000, etc.). In one example, the product is or has the specifications of Aluminum 3105, which has an aluminum purity of about 98% (e.g, 98% Aluminum, 0.6 silicon, 0.4 Zinc, and other elements) . In another example, the product is or has the specifications of wrought aluminum alloy predominantly 3105 aluminum alloy or Grade 1 DEOX aluminum.

IBA is the ash that is left over after waste is burnt in an incinerator. Municipal energy from waste plants that use incineration burn a wide range of municipal wastes and therefore the term 'ash' is slightly misleading because it is not all powdery but contains glass, brick, rubble, sand, grit, metal, stone, concrete, ceramics and fused clinker. Examples of bottom ash for use with certain embodiments include the residues which are obtained when refuse of all kinds such as city garbage, sewer sludge and industrial waste is incinerated inside an incinerator. Examples of ash under consideration in this application include substances which fly off with the discharge gas when such refuse as described above is incinerated in an incinerator and is collected in its discharge gas processing system, or substances collected mainly by a dust collector provided in such a discharge gas processing system. In some examples, ash having an aluminum content of greater than 70% weight percentage is particularly useful.

In illustrative embodiments, the material may be a zorba. Institute of Scrap Recycling Industries (ISRI) defines zorba as "shredded mixed nonferrous metals consisting primarily of aluminum generated by eddy current separator or other segregation techniques." Other nonferrous metals found in zorba include copper, lead, brass, magnesium, stainless steel, nickel, tin and zinc in elemental or alloyed (solid) form.

In one embodiment, the incinerator bottom ash has undergone rough processing, which may be accomplished by identifying a physical property that is more pronounced in the metal than in the mineral matrix material and using that property for separation. In one example, the waste material may be rough processed using an eddy current, which results light material (typically referred to as zorba, incinerated zorba or incinerated non-ferrous). Although not shown separately, a portion of bottom ash with water content of 40 weight % can be preliminarily dried to reduce its water content to 10 weight % or less and then subjected to a sifting process and a crushing process, to create particles that could pass through a screen with a mesh size of 100 mm. Generally, ash taken out of an incinerator has a substantially large water content of about 20-50 weight % because of a moistening process, as explained above. If the water content exceeds 10-15 weight %, the adhesive force of bottom ash increases sharply and its angle of repose also increases rapidly such that the ash becomes likely to get stuck to a hopper and the conveyer, clogging various openings.

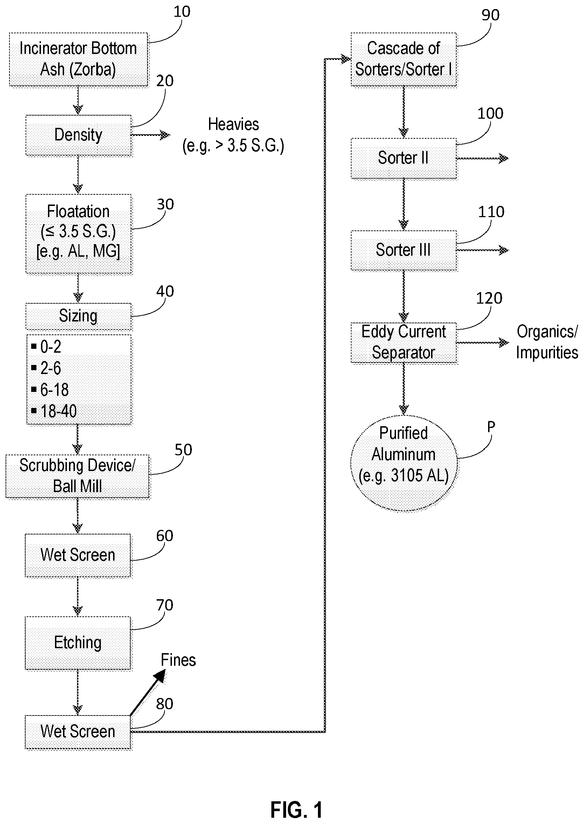

FIG. 1 shows a basic flow diagram according to a first embodiment. The IBA zorba or zorba 10 is processed using rough processing step to remove ferrous metals, heavy metals and other materials. Properties typically employed for the extraction of metals from zorba include, but are not limited to magnetic susceptibility, electrical conductivity, and density. For example, the IBA zorba or zorba 10 can be processed directly through "rough processing" using density separation 20, which is at about or at least 3.5 S.G. A density separation 20 at about 3.5 S.G. allows for the removal or recovery of heavy metals or "heavies." The material may also be subject to flotation 30, which removes impurities and other materials. Other density specification may be used with rough processing.

In one embodiment, the particles are sized so to optimize sorting, e.g., through an optical sorter or another type of sorter. The materials can be segregated into discrete size ranges based on, e.g., commercially available equipment and specifications. Sizing particles at step 40 may, in certain embodiments, include several steps of sizing particles. In one example, step 40 may include sizing the slurry with one or more screens that sizes the material into four segmented portions of particles having different respective sizes. In one embodiment, the four segmented portions of particles include (1) a segmented portion of particles having a dimension less than the predetermined size, which is about 2.0 mm in major dimension, (2) a segmented portion of particles having a major dimension between about 2.0 mm and 6 mm, (3) a segmented portion of particles having a major dimension between about 6.0 mm and 18 mm, and (3) a segmented portion of particles having a major dimension greater than 18 mm or between 18mm and about 40mm. In other embodiments, each of the segmented portions of particles may be defined by alternate size ranges, depending upon the characteristics of the screen(s) used at step 40. After step 40, the segmented portion of particles having the dimension less than the predetermined size are provided for processing in later steps.

The sized materials can be transported and fed to a comminution system/scrubbing device, e.g., a ball mill 50. The materials pass to or are fed to a ball mill, which pulverizes and flattens the material. The ball mill can pulverize non-metallic attachments such as glass, slag and rocks, e.g., that can be entrapped with the aluminum. Optionally, the metals that are flattened (because of their malleability properties) to increase the surface area and enhance the separation process.

After the scrubbing device or ball mill 50 step, the material can be subjected to a wet screening step 60. Wet screening units are designed to efficiently screen out fines and classify oversize particles.

At the etching step 70 and after the screening process, the material is subjected to or etched by an acid bath or wash. The acid suppresses the oxidation of the metals and improves the aesthetics of the material or product. Further, the acid blackens non-aluminum materials (e.g., cast aluminum, magnesium, and zinc). One exemplary acid includes 40% sulfuric acid - this acid can be sprayed from a sump holding the acid on a screen in a hood having a neutralizing base (e.g., caustic soda or sodium hydroxide). The sulfuric acid can then drain from a sump back to a holding container/tote for recirculation. A scrubber can be bled from its bottom to provide a rinse water as well. The pH may be controlled in both the sump and the scrubber. Other acids, e.g., hydrochloric acid can be used. In one example, the pH of the acid is between 1.0 and 4.0. In one example, the acid can be applied through a screw.

In one exemplary embodiment, the acid wash/bath darkens, blackens and/or alters the color of certain materials. For example, zinc, magnesium, and cast aluminum, can be darkened or blackened by the acid wash or bath. Certain aluminum cast and wrought materials can be blackened or darkened by the acid bath or wash. Copper and other heavy metals retained their color. The aluminum retains its relatively grayish color after the acid wash or bath.

After the etching step 70, the material may be further screened, e.g., at another wet screening step 80. At this step 80 and in one example, the materials screen for fines, which are less than about 6mm or less than 1mm. The materials less than 1 mm typically are copper and other impurities. The acid can be removed during this step 80.

After the materials have been etched, the material may be subjected to one or more cascade of sorters 90, 100, 110. In one exemplary embodiment, the acid washed material or the material can be subjected to optical sorters, stainless steel sorters, infrared sorters, camera sorting machines, and the like. Such sorters can be used to separate different types of the darkened materials from the grayer aluminum. In other words, the darkened materials can be removed from the loose gray aluminum, which results in a clean aluminum product. In one example, the sizing of the material correlates with the pixel limits of the sorter.

The sorter may be selected to remove the darkened and blackened material. In one example, the sorter 90 was an optical sorter screening for copper and brass based on color.

The material from the sorters 90, 100, 110 may be further treated with eddy currents 120, density separation, and other devices. For example, the use of eddy current 120 allows for additional organic material and other impurities to be removed from the material.

In one exemplary embodiment, the dewatered materials or the material are screened at about 1mm and about 6mm. Materials greater than 6 mm can be reprocessed through the ball mill, and materials less than 1 mm can be processed using other methods and techniques. The materials less than 1 mm typically are copper and other impurities. The materials between 1mm and 6mm are washed and/or dewatered. The overall metal content/purity increases because the pulverized non-metallics are washed through the de-watering screen. There can be a hood over the screen to allow the materials to be washed or sprayed.

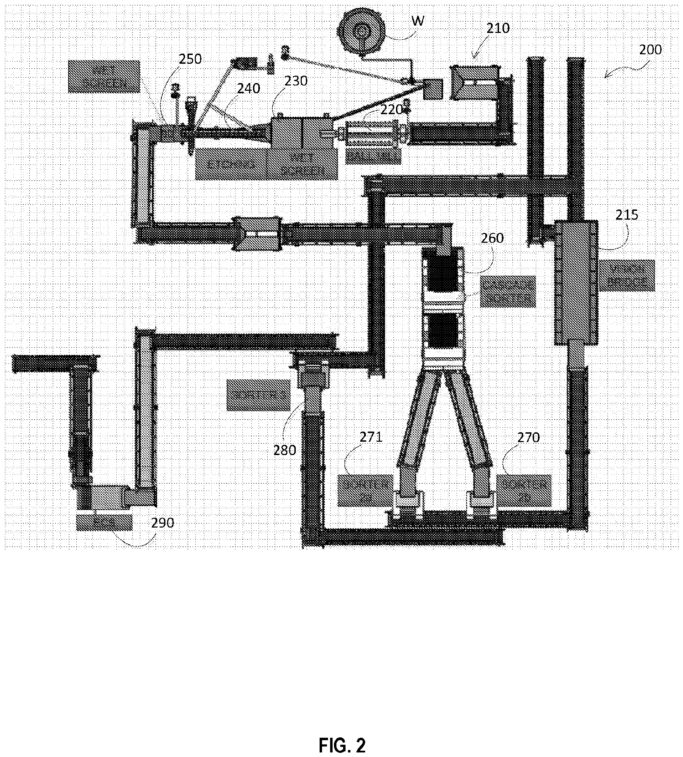

FIG. 2 shows an exemplary system for preparing an aluminum product and capable of executing steps of exemplary methods. As can be seen, the system 200 includes a source of waste material having aluminum and heavy metals or feeder 210; a rough processing device capable of removing the heavy metals from the waste material; a sizing device that sizes the waste material to predetermined sizes; a comminution device that is a ball mill 220; a first screen that is, e.g., a two-stage screen 230; an acid wash (e.g., an screw with an acid bath) or screw 240; a wet screen 250, at least one optical sorter 260, 270, 271, 280; and a collector for the aluminum product. The system may have a eddy current separator 290, and vision bridge 215, and water supply W. This system may operate according to the layouts shown in FIG. 2. Sizing or discrete sizing can improve separation of materials.

In this embodiment, the ball mill is a type of pulverizer, which is a cylindrical device used in grinding and pulverizing materials. Ball mills rotate around a horizontal axis, partially filled with the material to be ground plus a grinding medium. Different materials are used as media, including ceramic balls, flint pebbles and stainless steel balls. In one example, the balls have a radius between 4-5 mm. In one example, the ball mill is a rotary pulverizer having a plurality of liner sections on its inner periphery that are made of a composite material. The innermost layer or base of the liner section can be made from a resilient rubber material formed with an undulating outer surface.

One consequence of the ball mill processing is degradation and pulverization of glass that is bonded or adhered to the aluminum in the ash. For example, the ball mill acts to break, crush and separate any glass or silica mixed with the alumina in the ash.

In the separation process in accordance with the present embodiment, copper (e.g., tubes and wires) are pulverized and flattened into denser structures, which then sink in water, whereas the aluminum component is flattened, which increases floatation properties. The aluminum, glass and copper can be efficiently separated, e.g., by an ordinary screening operation. The aluminum, glass and copper can also be efficiently separated into their components, e.g., by specific gravity separation, such as centrifugal, inertial, and gravity classifications.

An optional dewatering step can be used to remove water and reduce the moisture in the material. This material can contain between 25% and 50% moisture by weight. The material can be placed in dryers where the moisture content is brought down to less than 20% by weight. The dryers operate at temperatures of greater than 300 degrees F, and the temperature can depend on the metal content and the desired level of moisture for the recovered product. The resulting volume of recovered metal powder is reduced over the previous dewatering step by as much as 30% to 50% by volume. The drying process drives off the moisture and other compounds that are not metallic leaving the metals in the resulting dry materials heavily concentrated.

In general, this disclosure provides an economical method of processing a bottom ash and fly ash using a ball mill. The silica content of the product is surprisingly low and allows for aluminum alloy sheet applications. The crushing and pulverizing of the silica allows for its removal. In certain examples, the weight percent of aluminum increased from about 92% to 97% and in another example, the weight percent of aluminum increased from 86% to about 99%. In many cases, the material or product can be used for new application, e.g., because the copper content has been reduced. The end product can be a prime aluminum product from IBA, which can be highly useful, e.g., in sheet alloy applications. It can have very good corrosion-resistance, finish-ability and strength. Specific embodiments can provide an aluminum-alloy clad sheet having high strength and excellent erosion resistance.

Although specific embodiments of the disclosure have been described above in detail, the description is merely for purposes of illustration. It is to be understood that the present description illustrates those aspects of the invention relevant to a clear understanding of the invention. Certain aspects of the invention that would be apparent to those of ordinary skill in the art and that, therefore, would not facilitate a better understanding of the invention have not been presented in order to simplify the present description. Although embodiments of the present invention have been described, one of ordinary skill in the art will, upon considering the foregoing description, recognize that many modifications and variations of the invention may be employed. All such variations and modifications of the invention are intended to be covered by the following claims.

## Claims

1. A method for separating waste material, comprising the steps of: providing the waste material having aluminum and heavy metals, rough processing (20) the waste material to remove the heavy metals, floating (30) the material, sizing (40) the material, comminuting the material, wet screening (60) the material, washing (70) the material with an acid to produce darkened material, and sorting the material to separate the darkened material and a purified aluminum product.

2. The method of claim 1, comprising separating the purified aluminum product using an eddy current (120).

3. The method of claim 2, wherein the sizing step sizes the material into a first portion between 0 and 2mm, a second portion between 2 and 6mm, a third portion between and 18mm, and a fourth portion between 18 and 40mm.

4. The method of claim 1, wherein the rough processing (20) includes density separation (20).

5. The method of claim 3, wherein the rough processing (20) includes density separation (20) at or about 3.5 SG.

6. The method of claim 1, wherein the comminution includes a ball mill (50; 220).

7. The method of claim 1, wherein the method is a continuous process.

8. The method of claim 1, wherein the method is a batch process.

9. The method of claim 1, wherein the waste material is incinerator bottom ash zorba.

10. The method of claim 1, wherein the waste material is zorba (10).

11. The method of claim 1, wherein the purified aluminum product contains greater than 97 percent by weight of aluminum.

12. A system (200) for preparing an aluminum product, comprising: a source of waste material having aluminum and heavy metals; a rough processing device capable of removing the heavy metals from the waste material; a sizing device that sizes the waste material to predetermined sizes; a comminution device that is a ball mill (50; 220) and that pulverizes the material; a first screen; an acid wash; at least one sorter; and a collector for the aluminum product.

13. The system of claim 12, wherein the acid is sulfuric acid.

## Patentansprüche

1. Verfahren zum Trennen von Abfallmaterial, beinhaltend die folgenden Schritte: Bereitstellen des Abfallmaterials, das Aluminium und Schwermetalle enthält, grobes Bearbeiten (20) des Abfallmaterials, um die Schwermetalle zu entfernen, Flotieren (30) des Materials, Klassieren (40) des Materials, Zerkleinern des Materials, Nasssieben (60) des Materials, Waschen (70) des Materials mit einer Säure, um ein verdunkeltes Material zu erzeugen, und Sortieren des Materials, um das verdunkelte Material und ein gereinigtes Aluminiumprodukt zu trennen.

2. Verfahren nach Anspruch 1, umfassend das Abtrennen des gereinigten Aluminiumprodukts unter Verwendung eines Wirbelstroms (120).

3. Verfahren nach Anspruch 2, wobei der Schritt des Sortierens das Material in einen ersten Teil zwischen 0 und 2 mm, einen zweiten Teil zwischen 2 und 6 mm, einen dritten Teil zwischen und 18 mm und einen vierten Teil zwischen 18 und 40 mm aufteilt.

4. Verfahren nach Anspruch 1, wobei die Grobbearbeitung (20) eine Dichtetrennung (20) umfasst.

5. Verfahren nach Anspruch 3, wobei die Grobbearbeitung (20) eine Dichtetrennung (20) bei oder bei etwa 3,5 SG umfasst.

6. Verfahren nach Anspruch 1, wobei die Zerkleinerung eine Kugelmühle (50; 220) umfasst.

7. Verfahren nach Anspruch 1, wobei das Verfahren ein kontinuierlicher Prozess ist.

8. Verfahren nach Anspruch 1, wobei das Verfahren ein Chargenprozess ist.

9. Verfahren nach Anspruch 1, wobei es sich bei dem Abfallmaterial um Verbrennungsschlacke Zorba handelt.

10. Verfahren nach Anspruch 1, wobei es sich bei dem Abfallmaterial um Zorba (10) handelt.

11. Verfahren nach Anspruch 1, wobei das gereinigte Aluminiumprodukt mehr als 97 Gewichtsprozent Aluminium enthält.

12. System (200) zur Herstellung eines Aluminiumprodukts, umfassend: eine Quelle für Abfallmaterial mit Aluminium und Schwermetallen; eine Grobverarbeitungsvorrichtung, die die Schwermetalle aus dem Abfallmaterial entfernen kann; eine Kalibriervorrichtung, die das Abfallmaterial auf vorbestimmte Größen zerkleinert; eine Zerkleinerungsvorrichtung, bei der es sich um eine Kugelmühle (50; 220) handelt und die das Material pulverisiert; ein erstes Sieb; eine Säurewäsche; mindestens einen Sortierer; und einen Sammler für das Aluminiumprodukt.

13. Das System nach Anspruch 12, wobei die Säure Schwefelsäure ist.

## Revendications

1. Méthode de séparation des déchets, comprenant les étapes suivantes : fournir des déchets contenant de l'aluminium et des métaux lourds, traiter grossièrement (20) les déchets pour éliminer les métaux lourds, faire flotter (30) les déchets, les calibrer (40), les broyer, les cribler par voie humide (60), les laver (70) avec un acide pour obtenir un matériau noirci, et trier le matériau pour séparer le matériau noirci et un produit d'aluminium purifié.

2. La méthode de la revendication 1, comprenant la séparation du produit d'aluminium purifié à l'aide d'un courant de Foucault (120).

3. La méthode de la revendication 2, dans laquelle l'étape de calibrage dimensionne le matériau en une première partie entre 0 et 2 mm, une deuxième partie entre 2 et 6 mm, une troisième partie entre et 18 mm, et une quatrième partie entre 18 et 40 mm.

4. La méthode de la revendication 1, dans laquelle le traitement grossier (20) comprend la séparation de la densité (20).

5. Méthode de la revendication 3, dans laquelle le traitement brut (20) comprend une séparation de densité (20) à ou à environ 3,5 SG.

6. Méthode de la revendication 1, dans laquelle le broyage comprend un broyeur à boulets (50 ; 220).

7. Méthode de la revendication 1, dans laquelle la méthode est un processus continu.

8. Méthode de la revendication 1, dans laquelle la méthode est un processus discontinu.

9. Méthode de la revendication 1, dans laquelle les déchets sont des cendres résiduelles d'incinérateur zorba.

10. Procédé selon la revendication 1, dans lequel les déchets sont de la zorba (10).

11. Méthode de la revendication 1, dans laquelle le produit d'aluminium purifié contient plus de 97 pour cent en poids d'aluminium.

12. Système (200) de préparation d'un produit en aluminium, comprenant : une source de déchets contenant de l'aluminium et des métaux lourds ; un dispositif de traitement brut capable d'éliminer les métaux lourds des déchets ; un dispositif de calibrage qui dimensionne les déchets à des tailles prédéterminées ; un dispositif de broyage qui est un broyeur à boulets (50 ; 220) et qui pulvérise le matériau ; un premier crible ; un lavage à l'acide ; au moins un trieur ; et un collecteur pour le produit en aluminium.

13. Le système de la revendication 12, dans lequel l'acide est de l'acide sulfurique.
